# EUROPEAN PATENT APPLICATION

(11) **EP 4 140 666 A1**
(43) Date of publication of application: **01.03.2023**
(21) Application number: 21193935.0
(22) Date of filing: 31.08.2021
(51) Int. Cl.: B25J 15/00

(54) **ELECTROADHESIVE GRIPPING SYSTEM AND METHOD FOR GRIPPING AN OBJECT**

(71) Applicant: ECOLE POLYTECHNIQUE FEDERALE DE LAUSANNE (EPFL), 1015 Lausanne (CH)
(72) Inventor: DIGUMARTI, Krishna Manaswi, 2000 NEUCHATEL (CH); CACUCCIOLO, Vito, 70125 BARI (IT); SHEA, Herbert, 2036 CORMONDRECHE (CH)
(74) Representative: Grosfillier, Philippe

(57) **Abstract**

An electroadhesive gripping system and a method for gripping and manipulating an object are disclosed. The invention provides a novel approach particularly useful to pick fabrics or otherwise flat and flexible objects including a method relying on electroadhesion as well as a pinch-type gripper to separate said object, such as a fabric ply, from e.g. a work surface.

## Description

### Technical Field

The present invention relates to a system and method for providing electrostatic adhesion, for example in the field of gripping, pick and place systems and robotics.

### Background Art

The manufacturing industry is a key driver of growth in the application of robotics and automation technologies. The textile industry, manufacturing of garments in particular, presents many opportunities and challenges which have not been met by traditional methods of automation. This is in part due to the flexible, stretchable and fragile nature of the objects involved. Some of the processes in the manufacturing of garments such as loading and unloading of fabric onto rollers, cutting into templates, and sewing have been automated. However, a bottleneck in the automation of garment manufacturing is the separation of pre-cut pieces of fabric from a stack and their subsequent manipulation. This is a crucial step and often involves fabric pieces varying in shape, size, thickness, material, stiffness, and surface texture among many other parameters. They are therefore picked up one layer at a time by trained human workers. An automated method for reliably separating one ply from another would boost productivity by resolving this bottleneck.

Several approaches have been proposed in the literature to achieve separation of fabric plies from a stack. Conventional grippers based on impactive prehension struggle to pick-up thin flexible sheets. Rigid grippers can damage fabrics made of soft materials. A commonly employed technique is the use of air pressure. The simplest example is the use of a passive suction cup. An improved adhesion may be obtained by actively applying a negative pressure at the end effector. These approaches perform poorly for all porous fabrics. Non-contact grippers based on Bernoulli's principle of airflow have also been proposed to move single plies of fabric and leather. In this case, a high velocity stream of air creates a local region of low pressure which results in a lifting force on the fabric. Vibration of the deformable fabric and potential blocking of the airflow are limitations of this approach.

Mechanical grippers that mimic the motion of the human hand have also been proposed to pick up flexible objects. A strategy relying on friction between fingers of a robotic hand and the fabric has been used to form a crease by repeated rubbing of the fabric, then grabbing the crease. Optimal positioning of fingers to create taller creases to facilitate pinch-type grasping has been investigated. While the range of materials that such grippers can handle is large, the deformation of the fabric while it is picked up poses major problems in subsequent tasks such as laying the fabric flat on the work surface.

A third approach relies on piercing the fabric to lift it up. Pins attached to a robotic end effector have been used to pierce the fabric. A roller with bristles has been used to separate sheets of cotton fabric. A soft gripper with micro-needles was demonstrated recently, which picked fabric up by penetrating through the fibres and pinching the cloth. A concern with these approaches is the possibility of damage through separation of fibres and tearing. Thickness of the cloth affects performance of the gripper. Piercing through multiple layers at a time is yet another concern.

Adhesive surfaces have also been used to pick up sheets of fabric. Over time, adhesives are prone to contamination from dust and stray fibres, thereby reducing their ability to stick. Localised freezing is another method used to separate fabric from a stack. In this case, the fabric is wet before grasping. The surface of the end effector is maintained at a low temperature, freezing the fabric locally upon contact. A drawback of this approach is the damage caused to fibres when frozen. Staining of the fabric by permeation of the liquid through the fibres is also undesirable. Localised heating may also be employed if suitable to the material being handled. For example, the surface of a carbon fibre sheet can be made tacky by heating it. However, post processing (smoothing) is required to remove the damage caused by heating and subsequent deformation.

Strategies based on electroadhesion (EA) have been proposed as a solution to the problem of grasping fabrics. One of the earliest examples uses a roller with an EA skin for ply-separation. A more recent study used four flat EA pads placed in a circular arrangement on a moving platform. By varying the distance between the pads, fabric sheets of different sizes are picked up. Commercial solutions such as the EA gripper from Grabit Inc. are used in the textile and aerospace industry to handle flat, flexible materials. Benefits of EA compared to alternative approaches are: handling a wide variety of materials and thicknesses, no damage to fibres, fast operation and pickup directly from the top surface. The comparatively lower forces generated by electrostatic fields and the requirement for the fabric to be flat for effective adhesion are a hindrance to more widespread use.

### Summary

In order to address and overcome at least some of the above-mentioned drawbacks of the prior art solutions, the present inventors developed an electroadhesive gripping system having improved features and capabilities.

In particular, a first purpose of the present invention is that of providing an integrated system for intuitively and optimally handling, moving and/or manipulating objects such as flat and deformable ones.

A further purpose of the present invention is that of providing a method for easily handling, moving and/or manipulating flat and deformable objects, typically located on a working surface, such as fabric plies.

Still a further purpose of the present invention is that of providing a convenient method and system to release an object grasped by electroadhesion.

These aims have been accomplished with the present invention, as described herein and in the appended claims.

Therefore, according to the present invention there is provided an electroadhesive gripping system according to claim 1.

In particular, one object of the present disclosure relates to an electroadhesive gripping system comprising:
a) a support frame comprising a first and second gripping fingers, wherein said first and second gripping fingers are configured to approach each other and firmly block an object upon gripping;
b) at least one electroadhesive surface comprising at least a first and second adjacent electrodes , said electroadhesive surface being located on or into said first gripping finger, wherein
   i) said first electrode is configured to apply a first voltage at a first location of the electroadhesive surface and
   ii) said second electrode is configured to apply a second voltage at a second location of the electroadhesive surface,
      wherein the difference in voltage between the first voltage and second voltage includes an electroadhesive voltage that produces an electrostatic force between the electroadhesive surface and the object.

Another object of the present invention relates to a method for gripping an object as per claim 11.

In embodiments, said method comprises:
- contacting a surface of said object with a first gripping finger comprising at least one electroadhesive surface therein or thereon, said electroadhesive surface having at least a first and second adjacent electrodes;
- applying an electroadhesive voltage difference creating alternating unlike charges in said adjacent electrodes that produces an electrostatic force between the electroadhesive surface and the object;
- adhering said electroadhesive surface to a surface of said object using said electrostatic attraction force provided by the electroadhesive voltage difference;
- rotating said first gripping finger about a portion of the electroadhesive surface; and
- moving a second gripping finger closer to said first gripping finger, or vice-versa, so that said first and second gripping fingers firmly block and grip the object.

The novel method according to the invention allows, in some exemplary embodiments, for ply-separation and manipulation of fabric sheets using a two fingered gripper that is equipped with one EA "skin". The used approach employs the EA force to very locally cause separation of plies. Subsequently, the separated fabric sheet is grasped between the two fingers of the gripper. In comparison to other electroadhesive grippers, where successful grasping requires a mechanism that is as big as or even bigger than the fabric sheet that is being picked up, the method of the invention requires only a small EA skin, the size of a human finger-tip, to handle fabric that is hundreds of times larger in size. Another advantage is the handling of non-flat fabrics. This expands the usability of EA to processes that deliberately set a non-flat topology in the fabric, such as in thermoforming of contours. Since a gripper with fingers is employed, there is the possibility of manipulating the fabric after it has been picked up, which is not possible with the other approaches up to the inventors' knowledge. As it will be apparent, the system and method according to the invention are also suitable for grasping, moving and/or manipulating other objects, particularly flat and deformable ones such as thin sheets or foils made of plastic, metal, fiberglass, foam, polyimide, or even pouches such as IV saline bags or foods packaged in flexible pouches, to cite a few.

Further embodiments of the present invention are defined by the appended claims.

The above and other objects, features and advantages of the herein presented subject-matter will become more apparent from a study of the following description with reference to the attached figures showing some preferred aspects of said subject-matter.

### Brief Description of Drawings

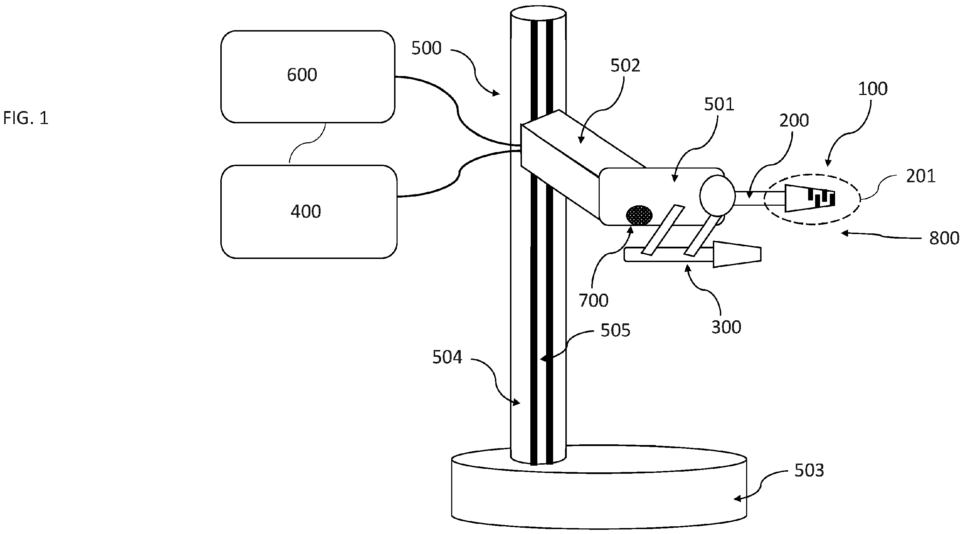

Figure 1 depicts one embodiment of the system of the invention;
Figure 2 depicts the same embodiment of the system of the invention as in Figure 1, wherein the applicable rotational motions of the movable units of the system are shown;
Figure 3 depicts the same embodiment of the system of the invention as in Figure 1, wherein the motion of a movable gripping finger upon actuation is shown;
Figure 4 depicts one embodiment of an electroadhesive surface according to the invention;
Figure 5 depicts one embodiment of an electroadhesive surface according to the invention comprising a set of parallel, interdigitated electrodes;
Figure 6 depicts one embodiment of an electroadhesive surface according to the invention comprising two sets, each having two adjacent electrodes;
Figure 7 shows an implemented embodiment of a portion of the system of the invention;
Figure 8 shows a sequence of images showing the process of separating and picking up a fabric ply. (a) The gripper approaches the fabric to be picked up. (b) The finger with the EA skin adheres to a corner of the fabric. (c) The gripper performs a rolling motion to cause the separation of the top ply. (d) A pinch-type motion is executed to firmly hold the fabric. (e) The fabric is then manipulated as desired. (f) The gripper releases the fabric by opening up the fingers and turning off electroadhesion;
Figure 9 shows the successful separation of the top ply from a stack of fabric sheets of type S2;
Figure 10 shows (a) An illustration of the finger with EA skin adhering to a corner of the fabric sheet. (b) During a vertical lifting motion, the fabric detaches from the finger due to peeling. (c) A rotation about the inner corner of the finger prevents peeling and keeps the fabric attached;
Figure 11 shows a graph of (a) Electroadhesive shear stress vs. applied voltage and (b) electroadhesive normal stress vs. applied voltage for the eight fabric samples. The data shows mean of three trials at each actuation voltage for every type of fabric;
Figure 12 shows a sequence of top-view images showing sheets of fabric before and after being picked up and manipulated. (a) A square sheet of fabric S2, 200 mm x 200 mm in size. (b) The same sheet after it has been folded in half. (c) A strip of fabric S1, 60 mm x 300 mm in size before it is picked up. (d) The same strip of fabric after being folded by the gripper. (e) A sheet of fabric S4 deliberately creased into a rose-like shape. (f) The same sheet after it has been picked up at the bottom left corner. (g) The sheet after the corner has been folded towards the centre. Scale bar = 5 cm;
Figure 13 shows a sequence of images of the picking up and manipulation of a stack of fabric sheets one at a time. (a) The stack of sheets before manipulation. (b) The stack after the first sheet, S2 has been folded, (c) after the second sheet S5 has been folded and (d) after the third sheet S3 has been folded.

### Detailed Description of Embodiments of the Invention

The subject-matter described in the following will be clarified by means of a description of those aspects which are depicted in the drawings. It is however to be understood that the scope of protection of the invention is not limited to those aspects described in the following and depicted in the drawings; to the contrary, the scope of protection of the invention is defined by the claims. Moreover, it is to be understood that the specific conditions or parameters described and/or shown in the following are not limiting of the scope of protection of the invention, and that the terminology used herein is for the purpose of describing particular aspects by way of example only and is not intended to be limiting.

Unless otherwise defined, technical and scientific terms used herein have the same meaning as commonly understood by one of ordinary skill in the art to which this invention belongs. Further, unless otherwise required by the context, singular terms shall include pluralities and plural terms shall include the singular. The methods and techniques of the present disclosure are generally performed according to conventional methods well known in the art and as described in various general and more specific references that are cited and discussed throughout the present specification unless otherwise indicated. Further, for the sake of clarity, the use of the term "about" is herein intended to encompass a variation of +/- 10% of a given value.

Non-limiting aspects of the subject-matter of the present disclosure will be described by way of example with reference to the accompanying figures, which are schematic and are not intended to be drawn to scale. For purposes of clarity, not every component is labelled in every figure, nor is every component of each aspect of the invention shown where illustration is not necessary to allow those of ordinary skill in the art to understand the invention.

The following description will be better understood by means of the following definitions.

As used in the following and in the appended claims, the singular forms "a", "an" and "the" include plural referents unless the context clearly dictates otherwise. Also, the use of "or" means "and/or" unless stated otherwise. Similarly, "comprise", "comprises", "comprising", "include", "includes" and "including" are interchangeable and not intended to be limiting. It is to be further understood that where for the description of various embodiments use is made of the term "comprising", those skilled in the art will understand that in some specific instances, an embodiment can be alternatively described using language "consisting essentially of" or "consisting of."

In the frame of the present disclosure, the expression "operatively connected" and similar reflects a functional relationship between the several components of the device or a system among them, that is, the term means that the components are correlated in a way to perform a designated function. The "designated function" can change depending on the different components involved in the connection. Likewise, any two components capable of being associated can also be viewed as being "operably couplable," to each other to achieve the desired functionality. A person skilled in the art would easily understand and figure out what are the designated functions of each and every component of the device or the system of the invention, as well as their correlations, on the basis of the present disclosure.

The materials used in accordance with the present invention for the supporting structure are soft polymers. In the frame of the present disclosure, a "soft" material is any material that is either compressible, reversibly compressible, elastic, stretchable or any combination thereof. The term "stretchable" is herein used to mean an intrinsic or engineered property of a material or structure that allows such material or structure to perform a large elongation upon a strain stress, typically of >5% of the elongation of a soft structure at rest, such as for instance more than about 10%, more than about 20%, more than about 50%, more than about 100%, more than about 200% or even more than about 1000% of a soft structure at rest. Preferably, the elongation is an elastic elongation, and the term "stretchable" in most of the embodiments according to the present disclosure should be intended as "elastically stretchable".

Suitable polymers according to the present disclosure may include, for example, thermosets or thermoplastics such as styrene butadiene, styrene (SBS) or styrene ethylene butylene styrene (SEBS); soft foams such as polyurethanes including reticulated polyurethanes; polyvinyl chloride (PVC), neoprene, uncrosslinked neoprene, cross-linked polyethylene, polyether, ethylene-vinyl acetate (EVA), polyethylene-vinyl acetate (PEVA), latex; elastomeric materials such as silicone rubber (e.g. polydimethylsiloxane PDMS) or fluorosilicone rubber; thermoplastic elastomers such as styrenic block copolymer (SBC), ethylene propylene diene monomer (EDPM) rubber, butyl rubber, nitrile rubber; acrylic elastomers; natural polymeric materials (i.e., non-synthetic polymers, polymers that can be found in nature) or suitable combinations of any of the foregoing.

Materials used may be selected based on one or more properties such as a high electrical breakdown strength, a low modulus of elasticity or the dielectric constant. In some embodiments, the polymer is selected such that it has an elastic modulus comprised between about 1 kPa and about 100 MPa, preferably between 0.1 MPa and 10 MPa.

In other embodiments, the polymer is selected such that is has a dielectric constant (relative permittivity) comprised between about 2 and 10, for instance between about 3 and 10 in the case of silicone and acrylic elastomers, or higher such as between about 60 and 120 for PDMS+BATIO3 composites or about 45 for P(VDF-TrFE-CTFE).

A "compliant electrode" is any structure or element able to carry an electric current, and adapted to change its shape according to the shape change of the support it adheres to without substantially compromising mechanical or electrical performance. Examples of compliant electrodes known in the art include metal thin-films (including patterned electrodes, of out-of-plane buckled electrodes, and corrugated membranes), metal-polymer nano-composites, carbon powder, carbon grease, metal nanowires, carbon nanotubes, conducting polymers such as PEDOT-PSS, liquid metals embedded in soft materials, conductive rubbers or paints, a review of which is provided by Rosset and Shea (Applied Physics A, February 2013, Volume 110, Issue 2, pp 281-307), incorporated herein in its entirety by reference. In one embodiment, stretchable electrodes as the one described in International Patent Application WO 2004/095536, incorporated herein in its entirety by reference, can be used. Alternatively or additionally, tubular or plain elements filled with an ionic liquid, a hydrogel or with liquid metals such as mercury or gallium, or alloys such as EGaln, oxides or combinations thereof, can be used.

As will be detailed later, substrates according to the present disclosure may be provided in the form of films. The expressions "film", as well as the interchangeable terms "sheet", "layer" or "membrane", relate to the thin form factor of an element of the device/system of the invention such as a dielectric substrate or an electrode. Generally speaking, a "film" as used herein relates to a layer of a material having a thickness much smaller than the other dimensions, e.g., at least one fifth compared to the other dimensions. Typically, a film is a solid layer having a first surface and a second surface, with any suitable shape or contour, and a thickness generally in the order of micrometres or millimetres, depending on the needs and circumstances, e.g., the manufacturing steps used to produce it. In some embodiments, films according to the invention have a thickness comprised between 0.1 µm and 5 mm, such as between 5 µm and 5 mm, between 5 µm and 1 mm, between 10 µm and 1 mm, between 5 µm and 500 µm , between 50 µm and 500 µm between, between 50 µm and 150 µm, 100 µm and 500 µm or between 200 µm and 2000 µm.

The term "electrode", as well as the interchangeable term "conductive track", refers to any film, path, stripe, strand, wire or the like which is electrically conductive in nature. A conductive track is generally a metallic element that conducts an electric current toward or away from an electric circuit, but can be made of any suitable electrically conductive material, including but not limited to metals such as Au, Pt, Al, Cu and the like, as well as any alloys, oxides and/or combinations thereof; conductive polymeric materials; composite material such as polymeric materials embedding metal particles and/or metal strands or stripes, including insulating materials functionalized with electrically conductive flakes or fibers, for example carbon-filled polymers; liquid metals, including alloys or oxides thereof, such as gallium; electrically conductive inks; as well as any suitable combination thereof.

The electrode material can be deposited on a substrate, such as a film, using a variety of techniques known in the art including, but not limited to, printing, pad printing, screen printing, silk screening, flexography, gravure, blade coating, offset lithography, inkjet, painting, spraying, soldering, bonding deposited using touch-less technologies or otherwise transferred onto the surface of a substrate. In an embodiment, the electrode can be formed by depositing an electrically conductive coating or layer by spraying a preselected onto the designated surface region. Alternatively, the electrode can be formed by depositing the electrically-conductive material onto a region of a substrate by vacuum deposition or printing the electrically conductive material on the designated surface region. This provides an electrically conductive coating of a desired thickness and a relatively uniform electrode through the desired area. Printing processes can include pad printing, screen printing and the like. Touch-free technologies such as positive material deposition of ink from a syringe or similar device can also be used to transfer conductive film or ink onto substrates that are sensitive to pressure. Tracks/pattern of electrodes can also be formed by a subtractive manufacturing process, such as by depositing a layer of a conductive material followed by an insulating material, and removing the in-between regions by engraving or etching, thereby exposing the electrical conductive regions.

As used herein, the term "electroadhesion" refers to the mechanical coupling of two objects using electrostatic forces. Electroadhesion as described herein uses electrical control of these electrostatic forces to permit temporary and detachable attachment between two objects. Electroadhesion exploits electrostatic attraction forces generated by electric charges of opposing polarity at the interface between the device and the object surface. A high electric field induces polarized charges in dielectric objects, and electrostatic induction in conductive objects, leading to strong but rapidly reversible adhesion. Electroadhesion is effective on both smooth and rough surfaces, on insulators and on conductors.

The present invention provides an improved and optimized automated handling system and method that permits the handling of a wide variety of objects with the use of electroadhesive forces, such that the object is held or moved by way of such electroadhesive attraction forces.

The electroadhesion technology is a technique that permits adherence between two objects by means of controllable electric fields: when an electroadhesive device is positioned against or near a surface of an item to be handled, the electrostatic adherence forces hold the object to the electroadhesive device. This can be used to increase traction or shear (i.e., anti-slip) forces between the electroadhesive device and the handled item. Electrical control of the electrostatic adhesion voltage permits the adhesion to be controllably and readily turned on and off. Variances in the electrostatic adhesion voltages can be used to vary the electroadhesive force.

In a main aspect, the invention provides for an electroadhesive gripping system comprising:
a) a support frame comprising a first and second gripping fingers, wherein said first and second gripping fingers are configured to approach each other and firmly block an object upon gripping;
b) at least one electroadhesive surface comprising at least a first and second adjacent electrodes, said electroadhesive surface being located on or into a portion of said first gripping finger, wherein
   i) said first electrode is configured to apply a first voltage at a first location of the electroadhesive surface and
   ii) said second electrode is configured to apply a second voltage at a second location of the electroadhesive surface,
      wherein the difference in voltage between the first voltage and second voltage includes an electroadhesive voltage that produces an electrostatic force between the electroadhesive surface and the object.

The main advantage of the system according to the invention, compared to similar electroadhesive grippers known in the art, relies in the design of the support frame, which optimizes the gripping and handling of various flat and deformable items independent of their positioning or shape. The invention is based, at least in part, on the observation that the actual lifting/holding force of an electroadhesive-based device depends on the electrical field but also on the grasping posture, which determines the so-called peeling angle between the gripper and the target item. The lifting force can change dramatically based on the grasping posture, making conventional grippers only useful for a narrow range of sizes and shapes, depending on the design of the grippers. Additionally, when the grasping posture allows large lifting forces, releasing the object becomes difficult, requiring long time. Accordingly, adjusting the spacing, positioning and operation of end effectors, such as the herewith called "fingers", of a robotic system, may enable the gripping system to always achieve an optimal grasping posture, with a favourable peeling angle. Additionally, the release of the object can be dramatically improved by moving apart, such as opening-up, said fingers, leveraging active peeling to detach the fingers from the object.

The present system and method provides for a novel approach particularly conceived to pick up flat and deformable items, such as fabrics, and enable their manipulation. The method relies on electroadhesion to separate a flat and deformable item such as a fabric ply from a work surface or a stack of items, and a pinch-type gripper to grasp the item after it has been separated.

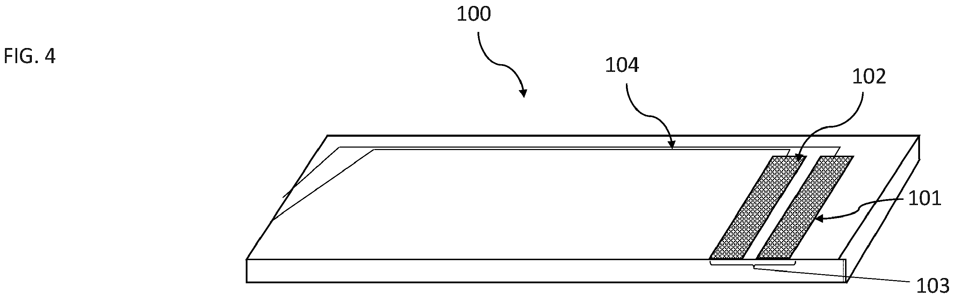

With reference to the Figures, non-limiting embodiments of the first aspect of the invention are depicted. The gripping system includes one electroadhesive surface **100,** schematically depicted in Fig. 4, located on or into a portion of the first gripping finger **200,** and comprising at least a first and second adjacent electrodes **101, 102** configured to be electrically operated to produce an electroadhesive voltage, creating in turn an electrostatic force. The electroadhesive surface **100** is configured to be placed against a first surface region **1001** of an external object **1000** having preferably a flat and deformable appearance, and can be adapted to be moved independently with respect to any other component of the system. The size of the electroadhesive surface **100** according to the invention can be tailored and may vary depending on the needs and circumstances typically between 1 mm² and 50 cm².

For the sake of clarity, an electroadhesive surface **100** according to the present disclosure is represented by at least a rigid, non-deformable portion **201** of the first gripping finger **200** together with said at least first and second adjacent electrodes **101, 102,** provided that i) the first electrode **101** is configured to apply a first voltage at a first location of the electroadhesive surface **100,** ii) the second electrode **102** is configured to apply a second voltage at a second location of the electroadhesive surface **100,** and iii) the difference in voltage between the first voltage and second voltage includes an electroadhesive voltage adapted to produce an electrostatic force between the electroadhesive surface **100** and a target object **1000** to be adhered. A portion **201** of the first gripping finger **200** defining or comprising an electroadhesive surface **100,** as well as in many embodiments the entire finger unit **200,** is "rigid" or "non-deformable", a feature that defines the ability of the material composing at least said portion **201** of the gripping finger **200,** and therefore the electroadhesive surface **100,** to distribute a load and resist deformation or deflection upon contact with a target item, in an operational gripping setting. Typical materials used in this context can include without limitations rigid or semi-rigid plastics such as Polyethylene (PE), Polyvinyl Chloride (PVC), Polypropylene (PP), Polylactic Acid (PLA), Polycarbonate (PC), Polymethylmethacrylate (PMMA), Polyoxymethylene (POM), ABS (Acrylonitrile Butadiene Styrene) and the like; metals (including alloys thereof), ceramics, wood and glass. "Rigid" or "non-deformable" materials according to the invention are characterized by a sufficiently high stiffness, described by their flexural strength (stress at failure in bending in a flexure test), allowing a deformation or deflection of the electroadhesive surface **100** of no more than 5% in terms of bending.

The expression "flexural strength" refers to a material property defined as the stress in a material just before it yields in a flexure test. The transverse bending test is most frequently employed, in which a specimen having either a circular or rectangular cross-section is bent until fracture or yielding using the well-known three or four point flexural test technique, according for instance to ASTM D790 and ISO 178 standards of measurement. The flexural strength represents the highest stress experienced within the material at its moment of yield.

Accordingly, non-deformable materials used for the electroadhesive surface **100** have a stiffness in terms of flexural strength typically comprised between 10 MPa and 1 GPa, and a flexural modulus typically comprised between 1 and 20 GPa.

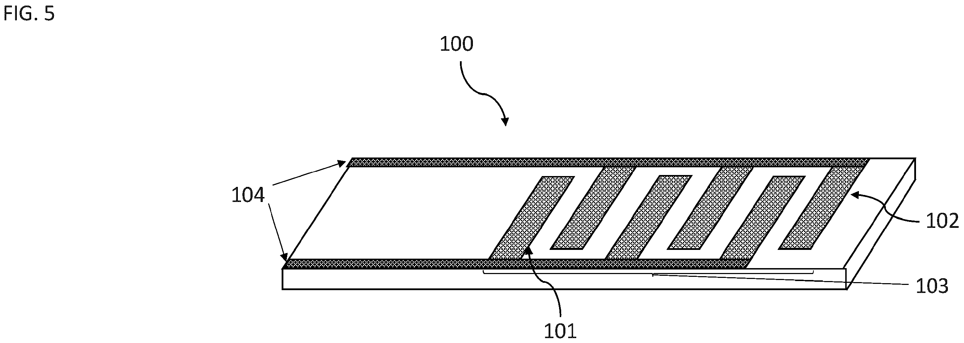

In various embodiments of the present invention, shown in Fig. 5, an electrodes' sets **103** in/on an electroadhesive surface **100** comprises several parallel, evenly spaced electrodes arranged in an interdigitated fashion. For the sake of clarity and ease of understanding, as in all the other figures, relative dimensions and positioning of the components of an electroadhesive element as shown are expressly exaggerated and do not necessarily reflect their real arrangements and dispositions.

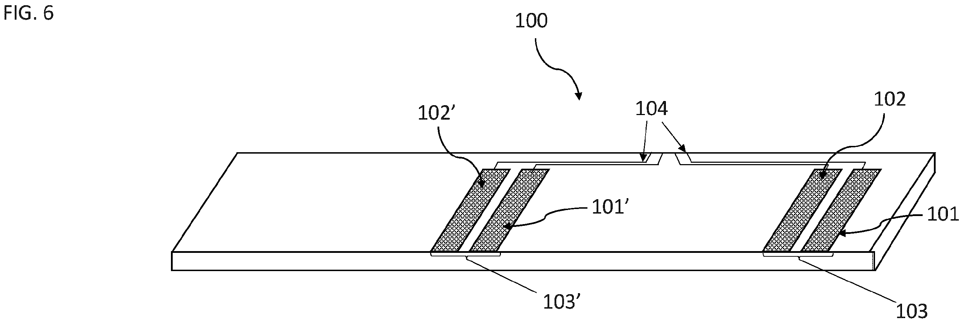

In embodiments of the invention, the system may comprise a plurality of electroadhesive surfaces **100, 100',** each comprising a set **103, 103'** of at least two adjacent electrodes **101/102** - **101'/102'** located on or within said electroadhesive surfaces **100, 100',** and each located on or into a non-deformable portion **201, 201'** of the first gripping finger **200** (Fig. 6). Any set of at least two adjacent electrodes in any of the electroadhesive surfaces is configured to provide for an electroadhesive voltage difference that produces, in each electroadhesive surface, an electrostatic force between said electroadhesive surface and a target object. The electroadhesive surfaces **100, 100'** can be functionally arranged within the system in order to provide various performances; for instance, in some embodiments, active electroadhesive areas **100, 100'** can be arranged such that a sequential gripping and/or ungripping operation is performed on an external object **1000.** Electroadhesive surfaces **100, 100'** can also be operated independently one from another, or concomitantly, depending on the needs, and can also be operated sequentially. This allows a great freedom of operations and may facilitate and/or accelerate separation of single target objects in e.g. a stack of the same.

In one embodiment the system further comprises a power supply **400** configured to electrically connect to said at least first and second electrodes **101, 102** associated with the at least one electroadhesive surface **100.** An electrostatic adhesion effect can be provided in an electroadhesive surface **100** according to the invention by applying a voltage via a power supply **400** to create alternating unlike charges in adjacent electrodes of each electrodes' set. Electroadhesion uses electrostatic forces of attraction produced by an electrostatic adhesion voltage, which is applied using electrodes in an electroadhesive device. The electrostatic adhesion voltage produces an electric field and electrostatic adherence forces. When an electroadhesive device and electrodes are positioned near a surface of an object, the electrostatic adherence forces hold the electroadhesive device in position relative to an object's surface: therefore, electroadhesion can be also defined as the temporary and detachable mechanical coupling of two objects using electrostatic forces. This can be used to increase traction or maintain the position of an electroadhesive device relative to an object's surface. Electric control of the electrostatic adhesion voltage permits the adhesion to be controllably and readily turned on and off by controlling the applied voltage.

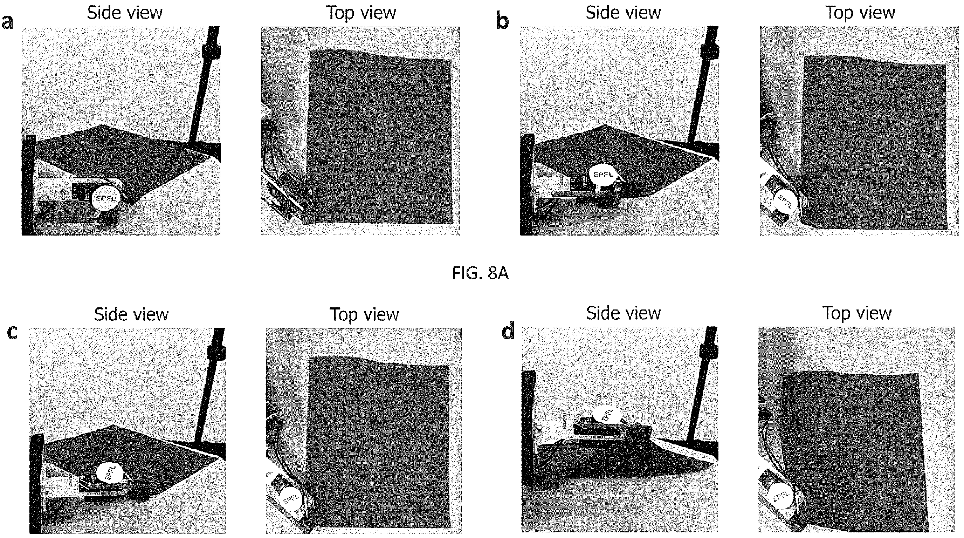

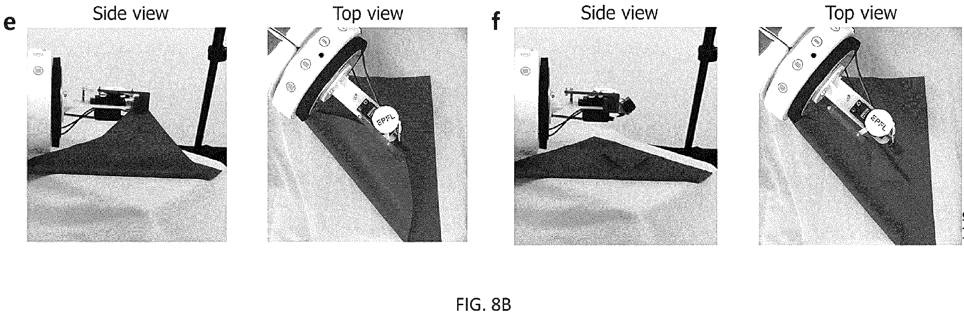

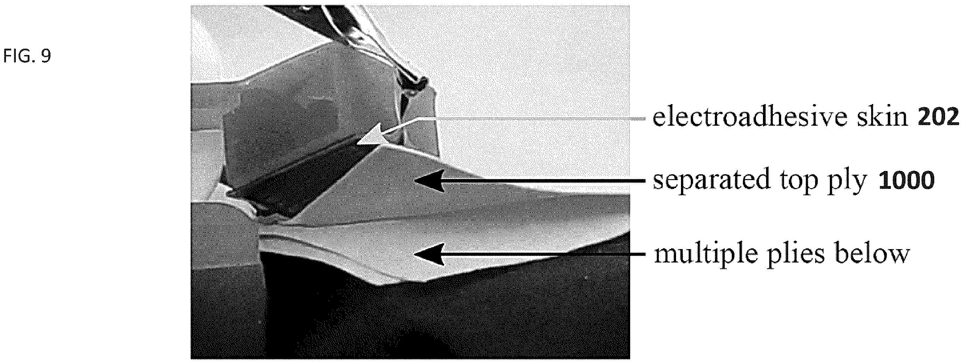

For instance, a suitable electroadhesive voltage can be applied to the system of the invention via operative connection with a power supply **400** either directly or through a circuitry **104** configured to provide an electrical current and create a voltage between electrodes **101, 102** in a way that electrode **101** is positively charged and electrode **102** is negatively charged. As a result of the voltage difference between the electrodes, an electric field forms on the electroadhesive surface **100** that locally polarizes an object **1000** operatively disposed in the near vicinity of its surface, and thus causes electrostatic adhesion between the electroadhesive surface **100** and the polarized object **1000.** Removal of the electrostatic adhesion voltages from electrodes ceases the electrostatic adhesion force between the electroadhesive surface **100** and the object **1000** (Figs. 8, 9).

The exact mechanism for force generation will also depend on conductivity and dielectric constant of the external object's material. Notably, the present invention is not limited by the electrical characteristics of the substrate being adhered to, since electroadhesion effect works well for both conductive and non-conductive (or insulating) substrates. In order to finely tune and tailor the electrostatic forces created between the system of the invention and the target object **1000** upon electroadhesion, different embodiments regarding dimensions, materials or positioning of the components of the device can be envisaged; for instance, when object **1000** is substantially made of a highly conductive material, electrodes **101, 102** can be preferably embedded within the electroadhesive surface **100.**

The electroadhesion effect as described herein permits fast clamping and unclamping times and may be considered almost instantaneous, particularly with a response time comprised between about 1 ms and about 1 s. The speed may also be increased by several means, such as for instance by regulating the gripper materials used in terms e.g., of lightness or compliance, the distance and the size of the electrodes or the applied voltage, this latter being an important parameter also for what concerns a suitable electrostatic force to couple the electroadhesive surface to an object. In this context, a suitable electrostatic adhesion voltage includes a differential voltage between the electrodes that is comprised between about 100 V and about 15 kV.

The electroadhesion forces and pressure will vary with design and a number of factors. In one embodiment, the system provides electroadhesive attraction pressures between about 1 Pa and about 1 MPa. The amount of force needed for an application may be achieved by varying the contacting surface of the electroadhesive surfaces. Generally speaking, increasing the voltage and the size of the components of the electroadhesive surface, or decreasing the distance between the electrodes, increases total electroadhesion forces. For instance, the pitch, or planar spacing between individual electrodes in electrode sets, may vary. The pitch represents the spacing between electrodes of different polarities upon application of an electroadhesive voltage. Generally speaking, narrower pitches and electrodes' widths allow faster clamping to more insulating or resistive external objects, while wider pitches and widths attract the electroadhesive surface to the external object from a greater distance. In some embodiments, the pitch between the electrodes can be non-uniform to allow a variety of geometric electric fields to be setup.

When in operation, upon application of a voltage to the one or more electrodes **101, 102** via the power supply **400** of the system, an electroadhesive surface **100** provides electrostatic adhesion towards an object **1000** situated proximate to said surface **100,** and a shear force can be applied to the adhered object **1000** via the support frame **500** or a functional portion of it, wherein said shear force is sufficient to move the adhered object **1000.** Such a system can allow the picking, placing or otherwise handling of objects that are large, irregularly shaped, textured and/or fragile, and with no use of suction, chemical adhesives or significant mechanical normal forces against the objects.

In one embodiment, the second gripping finger **300** is devoid of any electroadhesive surface. Most preferably, the second gripping finger **300** is substantially composed, at least in a picking portion thereof, of a rigid, non-deformable material such as hard plastics, wood, glass, metals and the like. The main purpose of the second gripping finger **300** is that of firmly block, in cooperation with the first gripping finger **200,** the target (flat and flexible) object **1000,** facilitating manipulation and displacement of the same. Accordingly, an electroadhesive surface is not deemed to be necessary, albeit theoretically envisageable, for the functional operation of the system, thereby also facilitating manufacturing and reducing costs. In this respect, in terms of active adhesion capabilities, the first gripping finger 200 can be the active finger of the two-finger gripping tool 800, and the second gripping finger 300 can be the passive finger, one that actually does not provide for electroadhesive effects or properties. For example, it is also possible that the second gripping finger includes electrodes 101, 102, 101', 102', circuitry 104, and operative interconnection to power supply 400, for example as shown in FIGs. 4-6, but in operation, electrodes 101, 102, 101', 102' of second gripping finger are not used, or selectively used depending on the application or on the overall gripping force that needs to be departed to a target object 1000, and are not operated to provide any electroadhesive properties or effects.

Moreover, with the embodiment having a first, active gripping finger 200, and a second, passive gripping finger 300, it is possible to provide forfingers 200, 300 with optionally different surface softness of the surfaces that face the respective fingers 200, 300 to form different surface softness at an area where target object 1000 will come into contact with finger 200, 300, and optionally also with different rigidity or flexibility between fingers 200, 300, or both different surface softness and rigidity. For example, a surface softness of the passive finger 300 can be made to be softer than a surface softness of the active finger 200. As the active finger 200 can provide for electroadhesion with the electrodes, the passive finger 300 can have a softer surface that allows to provide for some mechanical adhesion or anti-slipping properties by virtue of a surface deformation of the surface that is facing the first, active finger 200 of the gripping tool 800, when coming into contact with target object 1000. It is also possible that memory foam-like properties are departed or that a layer of passive finger has such memory foam-like properties. In turn, a surface softness of active finger 200 be harder than a surface softness of passive finger 300, as the adhesion can be controlled with the electroadhesion, but also optionally by the deformation of active finger 200. The surface softness can be defined by the elasticity of the surface layer of each finger 200, 300, for example expressed in a Young' modulus value in gigapascal (GPa) or megapascals. Preferably, a Young's modulus of the surface layer of passive finger 300 can be in a range between 0.00025 GPa to 1 GPa, more preferably between 0.001 GPa to 0.5 GPa. Thereby the gripping surface can be made deformable for providing an accommodating surface for target objects 1000. In contrast thereto, a Young's modulus of the surface layer of active finger 200 facing the passive finger 300 can be in a range of 0.005 GPa to 10 GPa. In terms of overall flexibility of the active finger 200 relative to the passive finger 300, the passive finger 300 can be stiffer, for example having a Young's modulus of at least 1 GPa or more, while the active finger 200 can have a Young's modulus of 1 GPa or less, for example in range between 0.01 and 0.5 GPa. In this respect, while the passive gripper 300 has a softer gripping surface that faces the active gripper 200, the overall flexibility of the passive gripper 300 can be chosen to be stiffer that the active gripper 200, of example by at least a factor 10 in terms of Young's modulus. This allows to provide for a stiffer holding base with passive gripper 300, and a softer active gripper 200 to facilitate gripping and holding of target objects 1000. However, it is also possible that both active and passive gripper 200, 300 have the same or substantially the same stiffness.

With the softer active gripper 200, it is possible that a shape of gripper finger 200 can accommodate to different surface structures and features of the target object 1000, by virtue of its deformability, while stiffer passive gripper 300 will provide for a support or base, for example by at least partially accommodating a shape of gripper finger 200 to a corner, edge, side, or other somewhat exposed or protruding structure of object 1000.

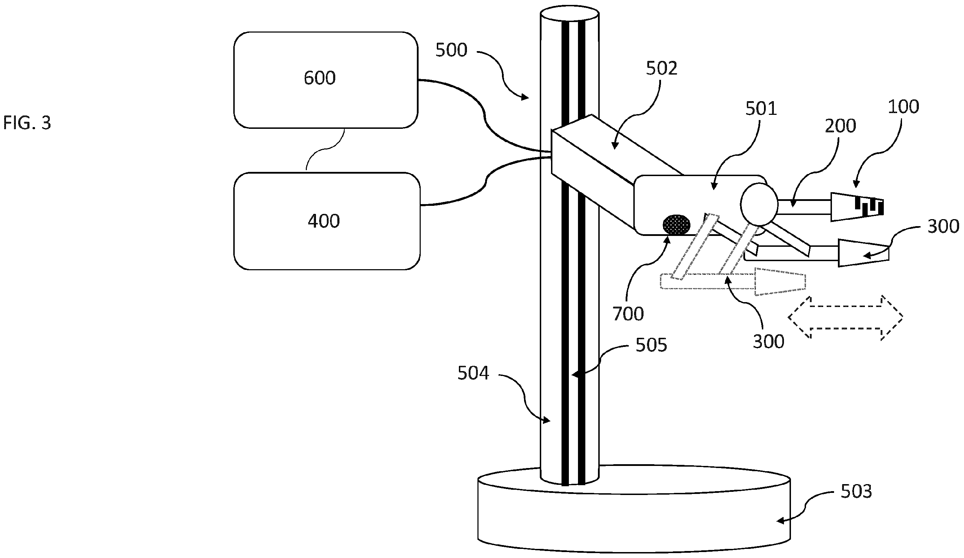

Turning now to the design of the support frame **500,** in a plurality of embodiments, a gripping tool **800** is provided including the first and second gripping fingers **200, 300** that are configured to move apart from and closer to each other, concurrently or independently, in one or more directions. However, in embodiments, the fingers **200, 300** can move together towards the same direction, depending on the needs and circumstances. In one embodiment, one (or more) finger(s) can be movable and moved while the other one(s) may be kept in a fixed position (see for instance Fig. 3). It is also possible that the gripping tool **800** of the system may comprise two, three, four or more fingers, at least one of them being movable with respect to at least another finger, and at least one comprising an electroadhesive surface 100, while others may not provide or not be provided with any electroadhesive properties or effects. A plurality of fingers can be used, for example, but not limited to a star-like configuration, two rows of a plurality of fingers, the rows arranged to face each other. The movable finger(s) can move in one or more directions so that the relative space between at least two fingers can augment or reduce in height, width and/or depth when considering a Cartesian coordinates system. Accordingly, at least one movable finger can move in one or more directions in e.g. the x-axis, the y-axis, and the z-axis so that the relative distance between at least two fingers can augment or decrease.

The concurrent or independent movement of the fingers **200, 300** of gripping tool **800** allows a variety of displacements of the external, gripped item to be moved. For instance, the concomitant movement of two or more fingers may be used to lift and/or displace the gripped item **1000,** as well as to approach said item **1000** before gripping, whereas the movement of a single finger, for instance along the y-axis in a Cartesian coordinates system, may be used to tilt or rotate the item once this has been electroadhesively grasped, thereby permitting a plethora of combined movements to optimally place said item in space, e.g. for pick and placing processes. As it will be apparent, combination and/or sequential movements of the fingers can be envisaged.

In a plurality of embodiments, the fingers **200, 300** of gripping tool 800 are separated by a gripping space that may vary depending on the relative movement of the fingers, thereby adapting said space to an item **1000** to grip (see Fig. 3). As used herein, a "gripping space" is the distance separating at least two fingers **200, 300** of the gripping system of the invention.

More particularly, at least one finger can be moved relative to another finger of the gripping system so that the finger "enlarges" the operational space. This configuration facilitates on one hand the adaptation of the electroadhesive gripping areas to the shape of the target item, and importantly, on the other hand, the release of said item upon termination of the gripping process (ungripping). Taking for instance the example of a flat and flexible object **1000,** such as a textile ply, lying on a surface in a Cartesian coordinates system, two fingers **200, 300** of gripping tool **800** of a gripping system according to the invention can move one relative to the other along the x-axis to augment the gripping space - i.e., the fingers **200, 300** move apart -. The fingers **200, 300** are then moved down along the y-axis to approach the item, and at that point the electrostatic adhesion can take place, thereby adhering a surface **1001** of the item **1000** to the electroadhesive surface **100.** The gripping space can be then reduced along the x-axis to by bringing closer the fingers up the point of e.g. touching the target item **1000** to firmly block it (see for instance Figs. 3 and 8).

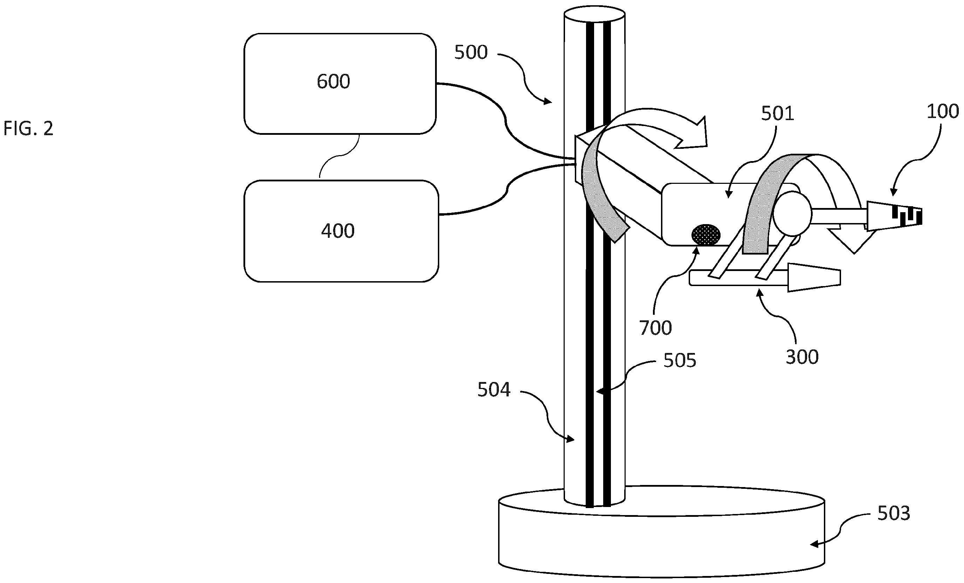

In a preferred embodiment, the support frame 500 includes an end effector **501** to which said first and second gripping fingers **200, 300** are operatively connected, said end effector **501** being configured to operate a rotating motion to lift or otherwise displace an object **1000** upon gripping. Said end effector **501** can be embodied for instance as a movable head. In one embodiment, the support frame **500** comprises a movable portion, such as a movable arm **502,** operatively connected to the gripping fingers **200, 300,** and configured to lift or otherwise displace an object **1000** upon gripping. The end effector **501** (e.g. a movable head) can be operatively coupled, in embodiments of the invention, to said movable arm **502.** The end effector **501** (e.g. a movable head) and/or the movable arm **502** typically include an embedded actuator **506** such as a linear and/or rotational actuator for performing translational and/or rotational motions. The presence of a rotating end effector **501** results advantageous for the implementation of a method for gripping an object **1000** according to the invention, as will be detailed later on, and is expediently conceived for implementing a flipping or "leaf through" motion when applied to flat and flexible/deformable items such as textile plies (see for instance Figs. 2 and 8).

The support frame **500** may comprise a base **503** and an elongated frame **504** stemming therefrom, along the y-axis, including a rail **505.** A movable arm **502** comprising the gripping fingers **200, 300** may be configured to move along the y-axis through the rail 505, in such a way to put the movable arm **502** and therefore the fingers **200, 300** closer to a target item **1000** positioned in correspondence of the base **503.** Once the item **1000** gripped, the movable arm **502** can run along the rail **505** along the y-axis so to lift the item **1000.** In other embodiments, the movable arm **502** can have more degrees of freedom so to expand the number of possible movements; for instance, the movable head can include a rotational joint or a ball joint consenting pitching, yawing and rolling thereof. In embodiments where the movable arm **502** can perform rotating motions, the presence of a rotating movable head **501** can be omitted, provided that a rotating movable arm **502** is configured to implement a flipping or "leaf through" motion when applied to flat and flexible/deformable items such as textile plies.

In other embodiments, the support frame **500** can be configured as planar, spherical or spatial parallel manipulators, such as for instance a Delta robot, as well as a serial robotic manipulator such as a robotic, single- or multi-joints arm.

According to one embodiment of the invention, the electroadhesive surface **100** located on the first robotic finger **200** is composed of two elements: a rigid, non-deformable support, typically a portion of the robotic finger **200** itself such as the above-referenced portion **201,** and one "electroadhesive (EA) skin" **202** operatively connected thereon, particularly on a surface of the first finger **200** configured to contact an item **1000** to be gripped. Advantageously, said EA skin **202** can be simply placed and replaced (if needed) on a surface of the first robotic finger **200,** simply connected with a power supply **400** and optimized in terms of design depending on the needs and circumstances.

The electroadhesive (EA) skin **202** is typically composed of a soft, flexible thin film of a dielectric material comprising on one surface, or embedded inside the dielectric material itself, electrodes **101, 102** configured to exert an electroadhesive voltage adapted to produce an electrostatic force between the electroadhesive surface and a target object.

With reference to Fig. 9, and according to this embodiment, an electroadhesive surface **100** is shown, comprising an EA skin **202** made of a conformable support **203** that in the exemplary embodiment is a soft, dielectric polymeric sheet or layer having a first surface **204** and a second surface **205.** The EA skin **202** comprises at least two adjacent electrodes **101** and **102** operatively connected and disposed on or within the dielectric substrate **203.** The electrodes **101** and **102** are located on or within a first active area **206,** configured to electrostatically adhere to an external object, defining preferably a limited portion of the polymeric support **203** relative to the total area thereof. Polymeric support **203** may covers a wide range of thicknesses. In one embodiment, polymer thickness may range between about 1 µm and about 1 mm, typically between 10 µm and 250 µm, for instance for silicone elastomers.

The entire system may of course, and preferably, comprise a data processing apparatus **600** operatively connected with the system, the data processing apparatus having a data processor and memory, for example a microcontroller having volatile and non-volatile memory, the memory having computer instructions recorded therein configured to operate the system to perform a method according to the invention. The data processing apparatus **600** of the invention can be embodied by different types of data processing devices, such as computers, smartphones, tablets, voice-activated devices (i.e. smart speakers/voice assistants) and the like.

In one embodiment, the data processing apparatus **600** comprises memory storing software modules that provide functionality when executed by the processor. The modules include an operating system that provides operating system functionality for the apparatus. The system, in embodiments that transmit and/or receive data from remote sources, may further include a communication device, such as a network interface card, to provide mobile wireless communication, such as Bluetooth, infrared, radio, Wi-Fi, cellular network, or other next-generation wireless-data network communication. In other embodiments, communication device provides a wired network connection, such as an Ethernet connection or a modem.

Still another aspect of the invention relates to a non-transitory computer readable medium containing a set of instructions that, when executed by data processing apparatus **600** of the system of the invention, cause said data processing apparatus **600** to operate the system to perform a method according to the invention. Further, one aspect of the invention relates to a data processing apparatus **600** comprising the non-transitory computer readable medium of the invention.

In embodiments, the instructions contained by the non-transitory computer readable medium comprise, among others:
- instructions for operating the structural and frame **500** components of the system;
- instructions for operating a power supply **400** according to the invention;
- instructions for operating sensors **700** according to the present disclosure, as will be detailed hereinafter.

Particularly, in one embodiment the system further comprises an operatively connected data processing apparatus **600** having a processor comprising instructions configured to operate at least one of i) the power supply **400,** ii) the first and second gripping fingers **200, 300** and iii) a movable arm **502** and/or an end effector **501.**

Advantageously, the data processing apparatus **600** may comprise instructions configured to operate the power supply **400** in such a way to produce an electroadhesive voltage difference to electrostatically adhere to an object situated proximate to the electroadhesive surface.

Advantageously, the data processing apparatus **600** may comprise instructions configured to operate the first and second gripping fingers **200, 300** in such a way to make them move apart from and closer to each other, concurrently or independently, in one or more directions.

Advantageously, the data processing apparatus **600** may comprise instructions configured to operate a movable arm **502** and/or an end effector **501** in such a way to perform a rotating motion about a portion of the electroadhesive surface **100.**

As anticipated, in some embodiments the system further comprises one or more sensors **700** operatively connected with the data processing apparatus **600** and with other portions of the system such as the arms **502,** the movable head **501** or the frame **500** in general, the sensors **700** being configured for instance to measure, detect and/or analyse a parameter of the system and/or of the surrounding environment.

A "sensor" as used herein is a device that detects (and possibly responds to) signals, stimuli or changes in quantitative and/or qualitative features of a given system, or the environment in general, and provides a corresponding output. The output is generally a signal that is converted to human-readable display at the sensor location or transmitted electronically over a network for reading or further processing. The specific input could be for instance light, heat, motion, moisture, pressure, or any one of a great number of other environmental phenomena. According to the invention, a sensor **700** preferably comprises means for detecting and possibly storing a system's parameter, an environmental parameter or a combination thereof. The sensor **700** can therefore comprise a data storage device to hold information, process information, or both. Common used data storage devices include memory cards, disk drives, ROM cartridges, volatile and non-volatile RAMs, optical discs, hard disk drives, flash memories and the like. A sensor **700** according to the present disclosure may be for instance a position sensor, an optical sensor such as a light sensor, infrared sensor or a camera, a motion sensor, a velocity sensor, a touch sensor, a proximity sensor, a temperature sensor, a microphone, a force / torque sensor, as well as combinations thereof.

Sensors **700** may further comprise means for transmitting the detected and possibly stored data concerning the above-mentioned parameters to the data processing apparatus **600,** in some embodiments through a wireless connection. "Wireless" refers herein to the transfer of information signals between two or more devices that are not connected by an electrical conductor, that is, without using wires. Some common means of wirelessly transferring signals includes, without limitations, WiFi, Bluetooth, magnetic, radio, telemetric, infrared, optical, ultrasonic connection and the like. In one embodiment, sensors **700** further comprise means for wirelessly receiving a feedback input from a computer able to regulate the functioning of the system.

Another aspect of the present invention relates to a method of gripping an object comprising:
- contacting a surface **1001** of said object **1000** with a first gripping finger **200** comprising at least one electroadhesive surface **100** therein or thereon, said electroadhesive surface **100** having at least a first and second adjacent electrodes **101, 102;**
- applying an electroadhesive voltage difference creating alternating unlike charges in said adjacent electrodes **101, 102** that produces an electrostatic force between the electroadhesive surface **100** and the object **1000;**
- adhering said electroadhesive surface **100** to a surface **1001** of said object **1000** using said electrostatic attraction force provided by the electroadhesive voltage difference;
- rotating said first gripping finger **200** about a portion of the electroadhesive surface **100;** and
- moving a second gripping finger **300** closer to said first gripping finger **200,** or vice-versa, so that said first and second gripping fingers **200, 300** firmly block and grip the object **1000.**

Advantageously, said object **1000** is a flat and flexible/deformable object such as a textile ply; a sheet or foil made of e.g. plastic, paper, metal, fiberglass, foam, polyimide; a pouch such as IV saline bag or foods packaged in flexible pouches. In embodiments, said object **1000** can be packed in a stack of objects, such as a paper ream.

Preferably, the step of contacting a surface **1001** of the object **1000** with at least one electroadhesive surface **100** located on a first gripping finger **200** comprises contacting said object surface **1001** in an eccentric position, such as contacting a corner or a side of said object **1000.** Still preferably, the at least one electroadhesive surface **100** has an area which is smaller compared to the area of the object **1000** to be contacted.

In one embodiment, the method further comprises a step of maintaining the electroadhesive voltage difference between said electrodes **101, 102.**

In one embodiment, the method further comprises a step of moving the gripping fingers **200, 300** to lift or otherwise displace the gripped object **1000.**

In one embodiment, the method further comprises a step of removing the electroadhesion voltage difference.

In one embodiment, the method further comprises a step of moving apart the gripping fingers **200, 300** relative to each other, thereby ungripping said object **1000.**

The main advantages of the system and method according to the present invention include, among others:
- scalability to items, such as fabrics, of various shapes and sizes;
- localized electroadhesive forces only to achieve successful separation of plies in a localised region;
- ability to manipulate items such as fabrics after picking them up;
- ability to pick up fabrics also when in a non-flat configuration (e.g. arranged in a rose shape);
- rapid de-adhesion after the applied voltage is switched off.

Achieving sufficient adhesion with a fabric sheet (object **1000)** and maintaining it while lifting it up are crucial to successful separation of plies. The weight of the fabric, bonding between layers and the elastic restoration forces oppose the lifting up of the sheet. As a consequence, the position on the fabric at which the gripper attempts to lift it up must be carefully chosen. Lifting the fabric up at a corner requires less force than lifting it along an edge or in the interior.

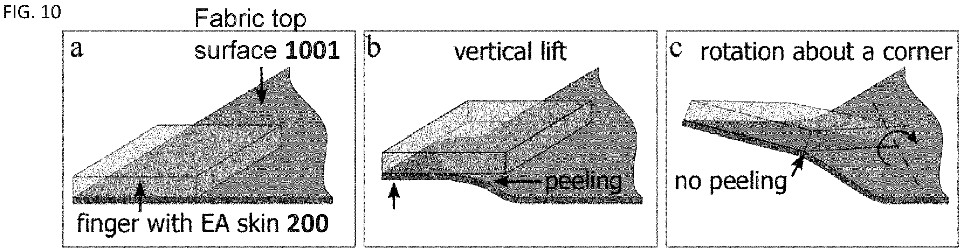

A second important factor to consider is the peeling of the fabric from the electroadhesion surface as it is being separated from e.g. the rest of a stack. A simple vertical lifting motion of the corner may be ineffective. As the corner is being lifted by electroadhesion, the remainder of the fabric exerts an opposing force which can result in the peeling away of the adhered region of the fabric (Fig. 10b). This peeling starts from the interior of the fabric and proceeds towards the corner. To counteract this detrimental phenomenon, a rotating motion of the fixed finger is employed, in a direction opposite to that of the propagation of peeling (Fig. 10c). The strategy for grasping fabric sheets can be described in the following steps (also shown in Fig. 8):
- Step I: Approach. The gripper approaches the fabric sheet **1000.** The passive finger **300** is in an open and retracted position to provide the active finger **200** comprising an electroadhesive surface **100** with unobstructed access to the object **1000** and ample space for manoeuvrability. (Fig. 8a).
- Step II: Adherence. The end effector (a rotating movable arm **502** in the shown embodiment) is positioned such that the finger **200** with the electroadhesive surface **100** rests on a corner of the fabric **1000** (Fig. 8b). A potential difference is applied across the electrodes within the electroadhesion surface **100.** The fabric **1000** then adheres to the finger **200** by means of electroadhesion.
- Step III: Ply-separation. The end effector **502** performs a rotating motion. The part of the textile **1000** that is adhering to the electroadhesion surface **100** is lifted up. The top ply **1000** is thus separated from the work surface or the plies lying below (Fig. 8c).
- Step IV: Grasping. After successful separation of the ply **1000,** it is held securely in a pinch-style grasp. This is achieved by moving the opposing finger **300** towards the fabric **1000** to perform the pinch (Fig. 8d). Therefore, the finger **200** with the electroadhesive surface **100** is used to adhere to the object **1000** and the opposing finger **300** is used to grasp the object firmly.
- Step V: Manipulation. The firmly grasped textile **1000** can then be manipulated as desired. In Fig. 8e, it is picked up from the work surface and folded.
- Step VI: Release. To release the fabric **1000,** electroadhesion is switched off and the finger **300** pinching the fabric **1000** is moved back to the open position. This releases the fabric **1000** at the location of choice (Fig. 8f).

The above description of the grasping and gripping method of the invention is of course not limited to textile plies, but it is to the contrary applicable to other flat and flexible/deformable objects such as, without limitation, sheets orfoils made of plastic, paper, metal, fiberglass, foam or polyimide; pouches such as IV saline bag; foods packaged in flexible pouches.

### EXAMPLES

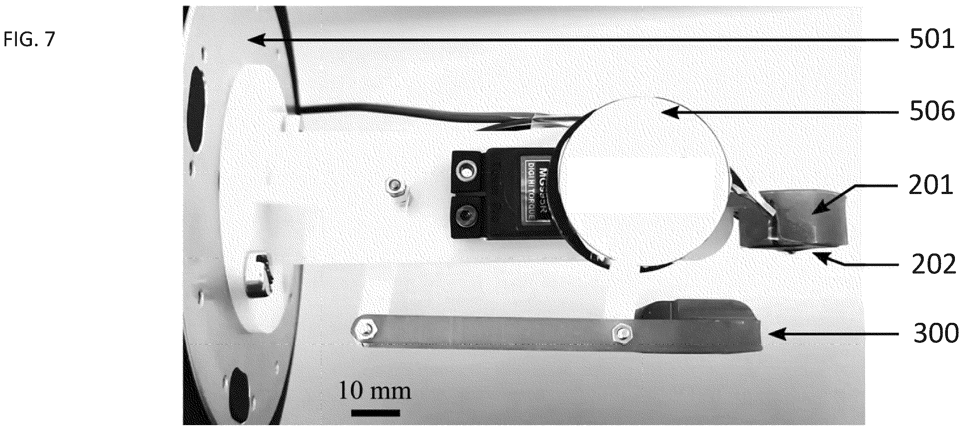

In a non-limiting example, the gripping system consists of two fingers **200, 300** (Fig. 7). One finger **200** is rigid and is equipped with an electroadhesive skin **202.** This finger is used to lift a corner of a fabric **1000.** The second finger **300** is able to move towards the rigid finger **200** to perform a grasp and away from it to release the fabric **1000** being held. A four-bar mechanism drives the movement of the second finger.

### Exemplary Methods of Use, Manufactuirng, and Applications

### A. Design of the gripper

A prototype to demonstrate this new method of grasping fabrics is shown in Fig. 7. The fingers were 3D printed in a LCD-based stereolithographic printer using a photo-curable resin. This fabrication method produces flat surfaces for the fingers, a required feature to affix the electroadhesive skin and to achieve complete mating of the fingers when closed. The fingers were attached to an acrylic frame. A servo motor (MG995, Tower Pro) fastened to the frame enabled the movement of the finger. The position of the finger was controlled using a microcontroller board (Arduino Uno). The gripper was mounted to a robot arm (P-Rob 3, F&P Personal Robotics) for positioning and handling of fabrics.

### B. Fabrication of EA skin

The electroadhesive skin was fabricated with a process involving four steps. First, a 170 µm thick layer of silicone (SYLGARD 184, Dow) was cast on a flat surface. After it cured (2 hours at 80 °C in an oven), a 15 µm thick layer of conductive silicone was cast on top of it. This layer has carbon powder (KETJENBLACK EC300J, AkzoNobel) mixed with silicone in a 10% proportion by weight. Once cured, the electrode pattern was cut out using a laser engraver. Finally, a third layer of silicone, 30 µm thick was cast to encase the electrodes. The overall size of the EA skin was 12 mm x 18 mm, about that of a human fingertip. The width of the electrodes was 330 µm and the spacing between them was 550 µm.

### C. Characterisation of fabric samples

The electroadhesion-based strategy for grasping was tested on eight different fabric materials. These are designated as S1-S8. The samples are commercial blends of materials such as elastane and polyamide, commonly used in the manufacturing of garments. Samples S1-S4 have a close-knit structure, S5-S7 have a mesh-like structure and S8 is a tufted woven fabric with a velvet-like surface. The average density of the samples was 200 g/m². Surface roughness: The areal surface texture of these samples was analysed using a confocal microscope (VKX1000, KEYENCE) according to the ISO 25178 specification. The surface roughness parameters are presented in table I. The arithmetic mean height (Sa) represents, as an absolute value, the difference in height of each point compared to the arithmetical mean of the surface. The maximum height parameter (Sz) is defined as the sum of the height of the highest peak and the depth of the lowest trough.

**TABLE I**

| SURFACE ROUGHNESS PARAMETERS OF THE TESTED FABRIC SAMPLES | | | | | | | | |
|---|---|---|---|---|---|---|---|---|
| Property | S1 | S2 | S3 | S4 | S5 | S6 | S7 | S8 |
| Sa (µm) | 30 | 22 | 77 | 57 | 107 | 164 | 134 | 69 |
| Sz (µm) | 450 | 354 | 716 | 790 | 412 | 806 | 929 | 1139 |

*Measurement of adhesive stresses:* Adhesion of the fabric to the EA skin is crucial to achieve successful separation of the fabric from whatever it is resting upon. A series of experiments was conducted to determine adhesive stresses on the fabric samples both in the shear and normal directions.

To measure the electroadhesive stress due to shear, a set of experiments was conducted as follows. The fabric sample was affixed to a horizontal platform. The EA skin was laid on top of it. A nylon nut was affixed to the exposed surface of the skin. One end of an inextensible string was wrapped around the nut. The other end of the string was attached to a load cell (Nano 17, ATI). A linear translation stage moved the load cell horizontally, thus pulling the EA skin across the surface of the fabric sample. The speed of movement was 0.1 mm/s. The total normal force on the EA skin due to its own weight and that of the nut was 0.37 g. Shear force between the contacting surfaces was measured with no voltage applied, and with a voltage of 1000 V, 1200 V and 1500 V. Each experiment was repeated three times for every fabric sample. Shear stress is computed by dividing the measured shear force by the area of the EA skin.

To measure the electroadhesive stress normal to the surface of the fabric, the following experiment was conducted. The EA skin was fixed to a horizontal platform. The fabric sample was affixed to a load cell (LRF400, Futek)) mounted on a vertical motorised stage. A voltage of 500 V, 1000 V, 1200 V or 1500 V was applied to the EA skin. The sample was first moved towards the skin until a maximum force of 80 mN was recorded on the load cell. This step ensured consistent contact between the EA skin and the sample. The sample was then moved away from the EA skin until it broke contact. The force was recorded throughout the motion of the sample. The speed of movement was 0.1 mm/s. Care was taken to ensure that surfaces of the sample and the EA skin were parallel to each other to maximise contact area. For each fabric sample, the experiment was repeated thrice at every voltage level. Normal stress is computed by dividing the measured normal force by the area of the EA skin.

### D. Picking fabric up

The grasping and manipulation strategy based on electroadhesion was implemented to pick sheets of fabric up. First, each sample was tested to check if successful separation from the work surface could be achieved using the steps previously described. In these experiments, the fabric sheet (about 200 mm x 300 mm) was placed on the work surface, which was a table covered in a large piece of cloth. Tests were performed at an electroadhesion voltage of 1.5 kV.

Next, the ability to manipulate the fabric after picking it up was demonstrated by folding the sheet in half by moving the picked-up corner. The robot arm was pre-programmed to perform this motion. This task was tested on sheets of various sizes; a 200 mm x 200 mm sheet made of fabric S2 and a 60 mm x 300 mm strip made of fabric S1. To evaluate if our grasping strategy works non-flat sheets of fabric, a test specimen of material S4 was deliberately crumpled to have multiple creases. Only a small portion of the fabric remained flat near a corner. The same set of motions used for the other experiments was repeated to pick the sheet up.

To test if the strategy successfully separates the top ply from a stack, two sets of experiments were performed. These were set up to replicate commonly encountered scenarios in the manufacturing of garments, in particular processes that use stacks of the same material and those that require multiple materials to be handled one after the other. In the first set, four sheets of the same fabric (S2), were placed on top of each other. The gripper was programmed to pick up the top most sheet. In the second set of experiments, three sheets of different fabrics (S4, S5 and S2) were placed on top of each other. The goal here was to sequentially pick each sheet up by a corner and fold it to the centre.

### RESULTS

### A. Characterisation of fabric samples

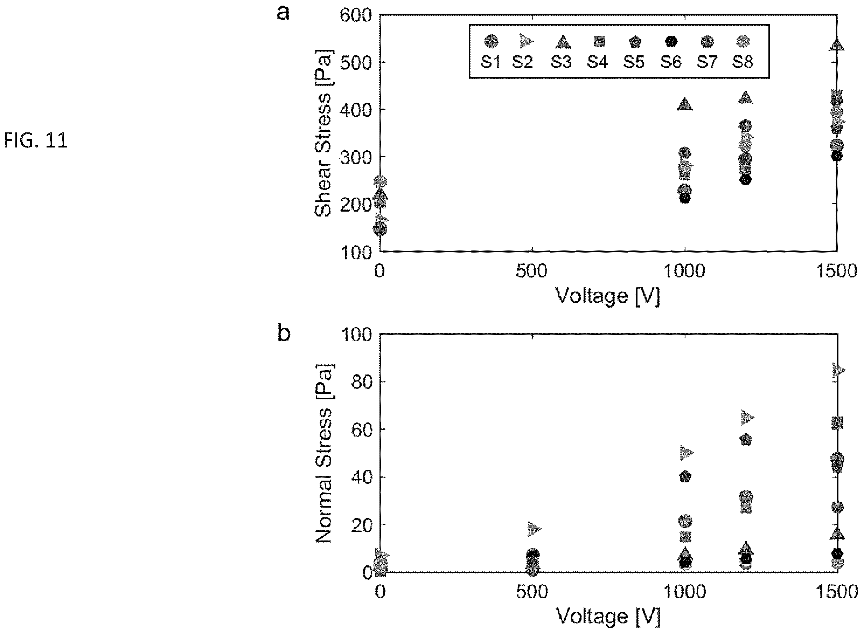

The measured electroadhesive stress on the various samples is presented in Fig. 11a and b. For every fabric, both the shear stress and normal stress due to electroadhesion increase with higher actuation voltages. Fabrics with a rough surface (e.g. S7 and S8) have lower adhesion in the normal direction compared the smoother fabrics. The effect of the surface roughness is also seen in the measured shear stress. The tufted fabric (S8) for example, has a higher shear pressure both at no actuation voltage (dry friction) and when adhering to the EA skin as compared to the smoother, closely knit fabrics (e.g. S1, S2).

### B. Picking fabric up

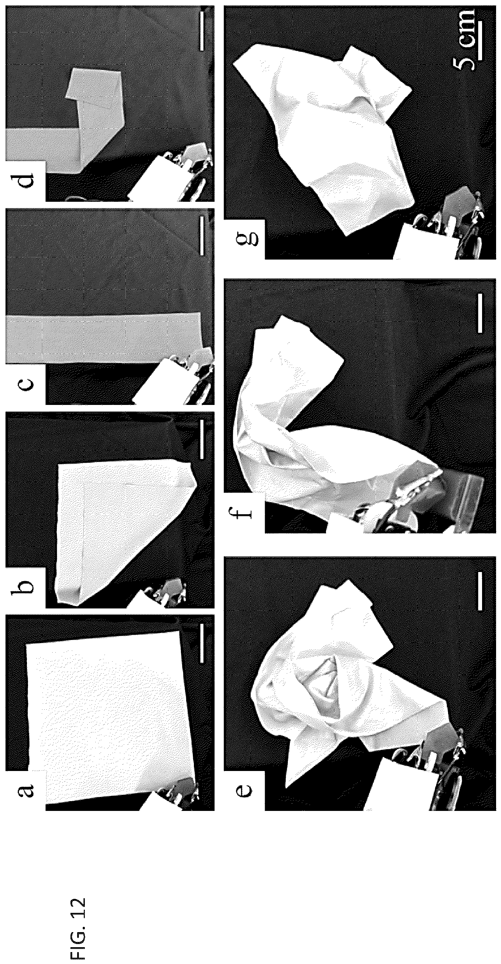

Fabrics with smoother surfaces (S1-S5) were all successfully picked up with the grasping routine already described. However, those with a high degree of variation in the surface (S6-S8) did not have sufficient adhesion to the EA skin and were not picked up. All of the different sheet sizes tested in the study were successfully picked up (Fig. 8 and Fig. 12a-d). A sequence of images in Fig. 12 shows these fabrics before and after being picked up and folded. The fabric with deliberately induced creases was also successfully picked up, without any issues (Fig. 12e-g).

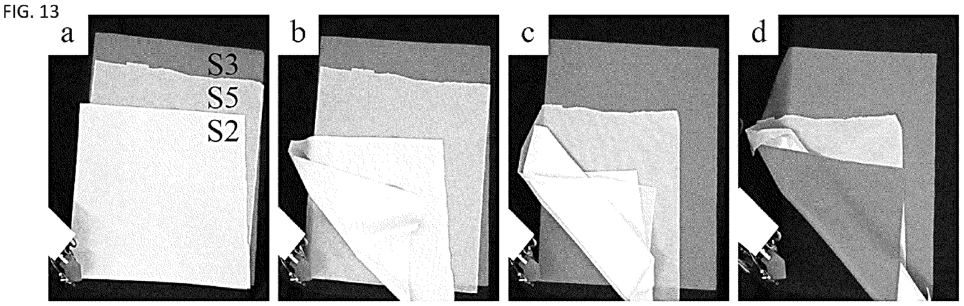

The EA based separation of plies from a stack also worked for the tested fabric (S2). The top ply adhered to the EA skin and was lifted up without affecting the plies below (Fig. 9). When tested on stacked sheets of dissimilar materials (S2, S3 and S5), the gripper had no trouble picking each top sheet up and folding it one after the other (Fig. 13).

The strategy of ply-separation and grasping combining small-area electroadhesion followed by pinching reported herein works for a variety of materials, as demonstrated above. The method proved particularly successful in the case of smoother fabrics (S1-S5) due to high adhesion force between the fabric and the EA skin. The fabrics that were not successfully picked up (S6-S8) have a rough surface (note the large Sz values in table I). Fabrics S6 and S7 have a mesh-like weave which is the reason for this roughness. As a consequence, the effective area of contact between the EA skin and the fabric is many times smaller than the area of the skin itself. A smaller contact area drastically reduces the achievable electroadhesive force on these materials. The issue is similar in the case of the velvet-like material (S8). This material has tufts of fibres that extend normal to the surface which reduce the contact area, resulting in a lower force of adhesion. Although fabric S5 had a mesh type structure, it was less wavy (lower Sz). The gripper was able to successfully pick this fabric up, demonstrating that the used strategy works for fabrics with voids, which is not possible with vacuum based grippers.

The results of the experiments with picking up sheets of different sizes shows that the present method can be scaled to fabrics of various shapes and sizes (Fig. 8 and 12), without any modification in the design of the gripper. Earlier approaches based on electroadhesion relied on using large and flat grasping surfaces to ensure large force of adhesion. Since the present approach relies on electroadhesive forces only to achieve successful separation of plies in a localised region, and thereafter uses a pinch-type gripper to handle the weight of the whole fabric, the shape and size of the fabric have a negligible impact on the performance.

Another advantage of the present method is the ability to manipulate fabrics after picking them up. In this study, it was demonstrated this ability by folding the fabric after picking it up (Fig. 12 a-d). Folding is possible because only a corner of the sheet is adhering to the gripper while the rest of the fabric is free to move.

A third benefit of the shown approach is the ability to pick up non-flat fabrics. It was demonstrated successful picking up of a crumpled fabric sheet that was arranged in a rose shape (Fig. 12 e-f). The present method only requires that a small local region, the size of a fingertip, be flat to be able to pick up and manipulate the sheet. On the contrary other electroadhesive grippers rely on the entire surface being flat. Electroadhesion is an elegant strategy to achieve separation of plies from a stack. The present inventors demonstrated this strategy for both similar and dissimilar materials (Fig. 9 and 13). Since the electroadhesion force decays quadratically with distance, this technique is well-suited to separate a single sheet without affecting other sheets lying below. While it has been argued that the separation of plies from a stack of dissimilar materials is a more challenging task due to different polarisation densities on either side of the ply, such as difficulty was not observed in the present experiments.

A common challenge with electroadhesion is the slow release of adhered objects after the applied voltage is switched off due to residual charges. Researchers have tried to address this issue by adding actuators to enable rapid release. The gripper of the present invention does not present such an issue as the aforementioned peeling due to the weight of the fabric aids in rapid de-adhesion.

While the invention has been disclosed with reference to certain preferred embodiments, numerous modifications, alterations, and changes to the described embodiments, and equivalents thereof, are possible without departing from the sphere and scope of the invention. Accordingly, it is intended that the invention not be limited to the described embodiments, and be given the broadest reasonable interpretation in accordance with the language of the appended claims.

## Claims

1. An electroadhesive gripping system comprising:
a) a support frame comprising a first and second gripping fingers, wherein said first and second gripping fingers are configured to approach each other and firmly block an object upon gripping;
b) at least one electroadhesive surface comprising at least a first and second adjacent electrodes, said electroadhesive surface being located on or into a portion of said first gripping finger, wherein
i) said first electrode is configured to apply a first voltage at a first location of the electroadhesive surface and
ii) said second electrode is configured to apply a second voltage at a second location of the electroadhesive surface,
wherein the difference in voltage between the first voltage and second voltage includes an electroadhesive voltage that produces an electrostatic force between the electroadhesive surface and the object.

2. The electroadhesive gripping system of claim 1, further comprising a power supply configured to electrically connect to said at least first and second electrodes associated with the at least one electroadhesive surface.

3. The electroadhesive gripping system of any one of claims 1 or 2, wherein the support frame includes an end effector to which said first and second gripping fingers are operatively connected, said end effector being configured to operate a rotating motion to lift or otherwise displace an object upon gripping.

4. The electroadhesive gripping system of any one of claims 1 to 3, wherein said at least one electroadhesive surface is non-deformable.

5. The electroadhesive gripping system of any one of the previous claims, wherein said first and second gripping fingers are configured to move apart from and closer to each other, concurrently or independently, in one or more directions.

6. The electroadhesive gripping system of any one of the previous claims, wherein the support frame comprises a movable portion, such as a movable arm, operatively connected to the gripping fingers, and configured to lift or otherwise displace an object upon gripping.

7. The electroadhesive gripping system of one of the previous claims, further comprising an operatively connected data processing apparatus having a processor comprising instructions configured to operate at least one of i) the power supply, ii) the first and second gripping fingers and iii) the end effector.

8. The electroadhesive gripping system of claim 7, wherein the data processing apparatus comprises instructions configured to operate the power supply in such a way to produce an electroadhesive voltage difference to electrostatically adhere to an object situated proximate to the electroadhesive surface.

9. The electroadhesive gripping system of claim 7, wherein the data processing apparatus comprises instructions configured to operate the first and second gripping fingers in such a way to make them move apart from and closer to each other, concurrently or independently, in one or more directions.

10. The electroadhesive gripping system of claim 7, wherein the data processing apparatus comprises instructions configured to operate the end effector in such a way to perform a rotating motion about a portion of the electroadhesive surface.

11. A method for gripping an object comprising:
- contacting a surface of said object with a first gripping finger comprising at least one electroadhesive surface therein or thereon, said electroadhesive surface having at least a first and second adjacent electrodes;
- applying an electroadhesive voltage difference creating alternating unlike charges in said adjacent electrodes that produces an electrostatic force between the electroadhesive surface and the object;
- adhering said electroadhesive surface to a surface of said object using said electrostatic attraction force provided by the electroadhesive voltage difference;
- rotating said first gripping finger about a portion of the electroadhesive surface; and
- moving a second gripping finger closer to said first gripping finger, or vice-versa, so that said first and second gripping fingers firmly block and grip the object.

12. The method of claim 11, further comprising a step of maintaining the electroadhesive voltage difference between said electrodes.

13. The method of claims 11 or 12, further comprising a step of moving the gripping fingers to lift or otherwise displace the gripped object.

14. The method of claims 11 to 13, further comprising step of moving apart the gripping fingers relative to each other, thereby ungripping said object.

15. A non-transitory computer readable medium containing a set of instructions, that when executed, cause a data processing apparatus to perform the method of claims 11 to 14.
